(19) Europäisches Patentamt
European Patent Office
Office européen des brevets

(11) **EP 4 542 922 A1**

(12) **DEMANDE DE BREVET EUROPEEN**

(43) Date de publication:
**23.04.2025 Bulletin 2025/17**

(21) Numéro de dépôt: **24206226.3**

(22) Date de dépôt: **11.10.2024**

(51) Classification Internationale des Brevets (IPC):
*H04L 9/08* (2006.01)          *H04L 9/30* (2006.01)
*G06F 7/58* (2006.01)

(52) Classification Coopérative des Brevets (CPC):
**H04L 9/3093; H04L 9/0869;** G06F 7/582

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **20.10.2023 FR 2311368**

(71) Demandeur: **STMicroelectronics International N.V.**
**1228 Plan-les-Ouates, Geneva (CH)**

(72) Inventeurs:
• **BLANC, Pierre-Alexandre**
  **1140 EVERE (BE)**
• **SARTORI, Benjamin**
  **1081 KOEKELBERG (BE)**

(74) Mandataire: **Cabinet Beaumont**
  **4, Place Robert Schuman**
  **B.P. 1529**
  **38025 Grenoble Cedex 1 (FR)**

(54) **GENERATION D'UNE MATRICE**

(57)    La présente description concerne un procédé de vérification (203), mis en oeuvre par un dispositif électronique, d'une matrice (M) utilisée pour la mise en oeuvre d'un algorithme de chiffrement de données (201) comprenant, pour la génération de ladite matrice (M), l'utilisation d'une première fonction et d'une deuxième fonction,
ledit procédé de vérification comprenant une vérification utilisant une partie finale des données de sortie de ladite première fonction.

Fig 2

**Description**

<u>Domaine technique</u>

La présente description concerne de façon générale les systèmes et dispositifs électroniques, et plus particulièrement la sécurité de ces systèmes et dispositifs. La présente description se rapporte, plus précisément, aux procédés de chiffrement de données, et à la vérification de leurs mises en oeuvre.

<u>Technique antérieure</u>

Différentes techniques de sécurisation de données secrètes et/ou sensibles sont utilisées de nos jours. Le chiffrement de données est l'une d'entre elles, et consiste en l'application d'un ou plusieurs algorithmes de cryptographie à des données, comme des données sensibles. Beaucoup d'algorithmes de cryptographie utilisent des matrices de données et/ou de polynômes.

Dans certains cas, ces matrices sont générées périodiquement, par exemple à chaque mise en oeuvre d'un procédé de chiffrement de données. Il peut alors être nécessaire de devoir vérifier la génération de ces matrices.

Il serait souhaitable de pouvoir améliorer au moins en partie certains aspects des procédés de vérification et/ou de détection d'erreurs de la mise en oeuvre de procédés de chiffrement de données.

<u>Résumé de l'invention</u>

Il existe un besoin pour des procédés de chiffrement de données employant des matrices de cryptographie qui ont été dument vérifiées.

Il existe un besoin pour des procédés de chiffrement de données utilisant des algorithmes de cryptographie basés sur les réseaux d'espace euclidien (Lattices-based cryptography) employant des matrices de cryptographie qui ont été dument vérifiées.

Il existe un besoin pour des procédés de chiffrement de données utilisant des algorithmes connu sous la dénomination "Kyber" employant des matrices de cryptographie qui ont été dument vérifiées.

Il existe un besoin pour des procédés de chiffrement de données utilisant des algorithmes connu sous la dénomination "CRYSTALS-Dilithium" employant des matrices de cryptographie qui ont été dument vérifiées.

Un mode de réalisation pallie tout ou partie des inconvénients des procédés de chiffrement de données connus.

Un mode de réalisation pallie tout ou partie des inconvénients des procédés de signature de données connus.

Un mode de réalisation pallie tout ou partie des inconvénients des procédés de vérification d'une matrice utilisée pour un procédé chiffrement de données connus.

Un mode de réalisation pallie tout ou partie des inconvénients des procédés de vérification d'une matrice utilisée pour un procédé de signature de données connus.

Un mode de réalisation prévoit un procédé de vérification de matrice utilisée pour la signature de données utilisant des données générées pendant la génération d'une telle matrice.

Un mode de réalisation prévoit un procédé de vérification de matrice utilisée pour la signature de données utilisant des données intermédiaires générées pendant la génération d'une telle matrice.

Un mode de réalisation prévoit un procédé de vérification, mis en oeuvre par un dispositif électronique, d'une matrice utilisée pour la mise en oeuvre d'un algorithme de chiffrement de données comprenant, pour la génération de ladite matrice, l'utilisation d'une première fonction et d'une deuxième fonction,
ledit procédé de vérification comprenant une vérification utilisant une partie finale des données de sortie de ladite première fonction.

Un autre mode de réalisation prévoit un dispositif électronique adapté à mettre en oeuvre un procédé de vérification d'une matrice utilisé pour la mise en oeuvre d'un algorithme de chiffrement de données comprenant, pour la génération de ladite matrice, l'utilisation d'une première fonction et d'une deuxième fonction,
ledit procédé de vérification comprenant une vérification utilisant une partie finale des données de sortie de ladite première fonction.

Selon un mode de réalisation, la première fonction est une fonction de génération de données pseudo-aléatoires.

Selon un mode de réalisation, la première fonction comprend une troisième fonction de hachage cryptographique.

Selon un mode de réalisation, la troisième fonction de hachage cryptographique est la fonction Keccak.

Selon un mode de réalisation, ladite deuxième fonction est une fonction de génération de polynômes à partir de données pseudo-aléatoires.

Selon un mode de réalisation, l'algorithme de chiffrement de donnée est un algorithme de cryptographie basé sur les réseaux d'espace euclidien.

Selon un mode de réalisation, l'algorithme de chiffrement de donnée est l'algorithme connu sous la dénomination "Kyber".

Selon un mode de réalisation, ladite matrice est la matrice A dudit algorithme connu sous la dénomination "Kyber".

Selon un mode de réalisation, ladite matrice est un vecteur de contexte dudit algorithme connu sous la dénomination "Kyber".

Selon un mode de réalisation, l'algorithme de chiffrement de donnée est l'algorithme connu sous la dénomination "CRYSTALS-Dilithium".

Un autre mode de réalisation prévoit un procédé de chiffrement de données adapté à mettre en oeuvre ledit algorithme de chiffrement de données, comprenant le procédé de vérification décrit précédemment.

Un autre mode de réalisation prévoit un produit-programme d'ordinateur adapté à mettre en oeuvre le procédé de vérification décrit précédemment.

Selon un mode de réalisation, le produit-programme d'ordinateur est adapté à mettre en oeuvre le procédé de chiffrement décrit précédemment.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, très schématiquement et sous forme de blocs, un mode de réalisation d'un dispositif électronique adapté à mettre en oeuvre les modes de réalisation des figures 2 à 4 ;

la figure 2 représente, très schématiquement et sous forme de blocs, un mode de mise en oeuvre d'un procédé de chiffrement de données ;

la figure 3 représente un mode de mise en oeuvre d'un procédé de génération d'une matrice du procédé de la figure 2 et un mode de mise en oeuvre du procédé de vérification de cette génération ; et

la figure 4 représente la mise en oeuvre d'une fonction du procédé de la figure 3.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent la vérification de la mise en oeuvre d'un procédé de chiffrement de données, et plus particulièrement la vérification de la bonne génération d'une matrice utilisée pour mettre en oeuvre un algorithme de chiffrement utilisé pour ce procédé de chiffrement de données.

Les matrices utilisées par les algorithmes de chiffrement de données, comme celles des algorithmes de cryptographie basés sur les réseaux d'espace euclidien (Lattices-based cryptography), peuvent être des matrices de tailles conséquentes dont le stockage est difficile. Il est donc souvent décidé de générer ces matrices au moment de leur utilisation. Dans certains cas, cette génération utilise une ou plusieurs données pseudo-aléatoires et une ou plusieurs données non aléatoires, comme, par exemple, des données de compteurs, et il convient donc de vérifier que la matrice générée est conforme. Les modes de réalisation décrits ci-après en détails concernent la mise en oeuvre d'une vérification d'une matrice générée en utilisant une fonction de génération de polynômes à partir de données pseudo-aléatoires et une fonction de génération de données pseudo-aléatoires. Le point clé de ces modes de réalisation est d'utiliser une partie des données de sortie de la fonction de génération de données pseudo-aléatoire pour réaliser cette vérification.

Ces modes de réalisation s'appliquent plus particulièrement à des matrices d'algorithmes de chiffrement connus sous la dénomination "CRYSTALS-Dilithium", ou connus sous la dénomination "Kyber".

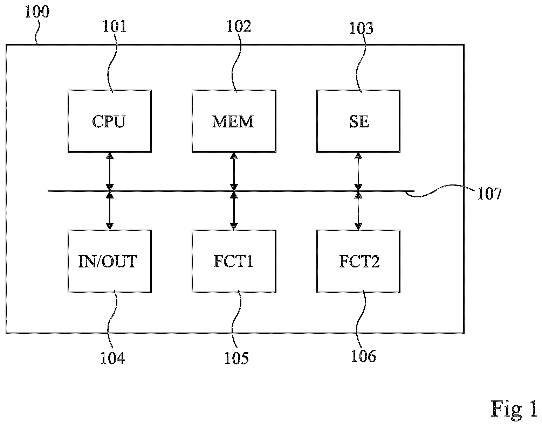

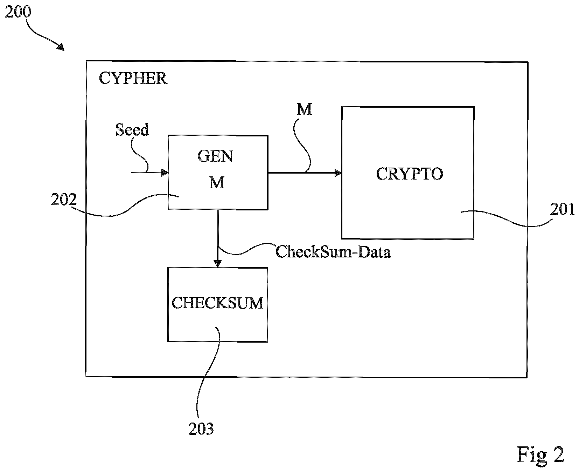

La figure 1 est un schéma bloc représentant, très schématiquement, une architecture d'un exemple d'un dispositif électronique 100 adapté à exécuter le mode de mise en oeuvre du procédé de vérification de matrice décrit ci-après en relation avec les figures 2 à 4.

Le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 est adapté à mettre en oeuvre un procédé de chiffrement de données utilisant un procédé de vérification selon un mode de réalisation.

Le dispositif électronique 100 comprend, en outre, différents types de mémoires 102 (MEM), parmi lesquelles, par exemple, une mémoire non volatile, une mémoire volatile 103, et/ou une mémoire morte 104. Chaque mémoire 102 est adaptée à stocker différents types de données.

Le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, l'élément sécurisé 101 est adapté à mettre en oeuvre un procédé de chiffrement de données utilisant un procédé de vérification selon un mode de réalisation.

Le dispositif électronique 100 peut comprendre, en outre, des circuits d'interface 104 (IO/OUT) adaptés à envoyer et/ou à recevoir des données provenant de l'extérieur du dispositif 100. Les circuits d'interface 104 peuvent être, en outre adaptés à mettre en oeuvre un affichage de données, par exemple, un écran d'affichage.

Le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesure, des circuits de conversion de données, etc.

Le dispositif électronique 100 comprend, en outre, un ou plusieurs bus de données 107 adaptés à transférer des données entre ses différents composants.

La figure 2 représente, très schématiquement et sous forme de blocs, un mode de mise en oeuvre d'un procédé de chiffrement de données 200 (CYPHER).

Le procédé de chiffrement de données 200, ou procédé de chiffrement 200, permet de chiffrer des données, ou peut permettre de signer des données.

Le procédé de chiffrement 200 comprend la mise en oeuvre d'un algorithme de cryptographie 201 (CRYPTO). Selon un mode de réalisation, l'algorithme de cryptographie 201 est un algorithme de cryptographie basé sur les réseaux d'espace euclidien (Lattices-based cryptography), comme, par exemple, l'algorithme connu sous la dénomination "Kyber" ou l'algorithme connu sous la dénomination "CRYSTALS-Dilithium". Selon un mode de réalisation préféré, l'algorithme de cryptographie 201 est l'algorithme connu sous la dénomination "Kyber".

Pour être mis en oeuvre, l'algorithme de cryptographie 201 comprend l'utilisation d'au moins une matrice M générée par un procédé de génération de matrice 202 (GEN M) faisant aussi partie du procédé de chiffrement 200. Le procédé de génération 201 prend, en entrée, au moins une donnée de génération seed. Le procédé de génération peut utiliser un ou plusieurs algorithmes de génération et une ou plusieurs fonctions de génération pour générer la matrice M. Selon une variante, le procédé de génération 202 peut faire partie de l'algorithme de cryptographie 201.

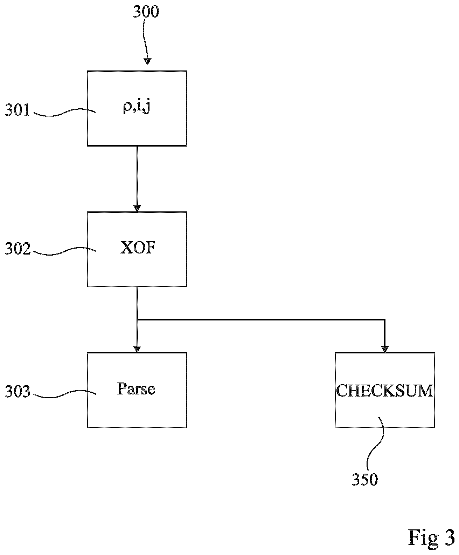

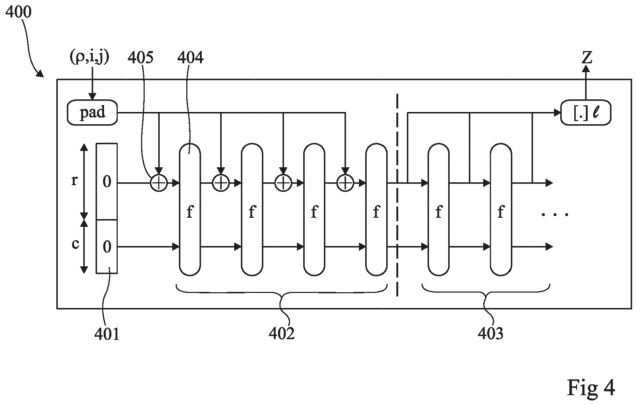

Le procédé de chiffrement 200 comprend, en outre, la mise en oeuvre d'un mode de réalisation d'un procédé de vérification 203 (CHECKSUM) de la génération de ladite au moins une matrice M, par l'intermédiaire d'une fonction de vérification. Pour cela, le procédé de vérification utilise des données CheckSum_Data fournies par la fonction de génération 202. La nature des données CheckSum_Data est décrite en relation avec les figures 3 et 4.

Selon le mode de réalisation préféré, lorsque l'algorithme de cryptographie est l'algorithme connu sous la dénomination "Kyber", le procédé de génération 202 est adapté à fournir :

- une matrice A publique permettant de mettre en oeuvre l'algorithme ; et

- des vecteurs SecretData représentant des données secrètes utilisées par l'algorithme.

La matrice A et les vecteurs SecretData sont tous obtenues en mettant en oeuvre le procédé de génération 202. Ainsi, la fonction de vérification 203 est adaptée à vérifier la génération de la matrice A et des vecteurs SecretData. Selon un exemple particulier, les vecteurs SecretData peuvent comprendre quatre vecteurs s, e, r et e2 représentant des données secrètes, et ayant tous une taille de l'ordre de 256 coefficients ayant chacun une taille de 12 bits.

Le procédé de chiffrement 200 est adapté à être mis en oeuvre par un dispositif électronique du type du dispositif 100 décrit en relation avec la figure 1, comme par son processeur 101 ou son élément sécurisé 103, ou par un dispositif électronique plus complexe comme un ordinateur. Il est en de même pour l'algorithme 201, le procédé de génération 202 et le procédé de vérification 203. Selon un mode de réalisation, le procédé de chiffrement 200, l'algorithme 201, le procédé de génération 202 et le procédé de vérification 203 peuvent tous être mis en oeuvre par des produit-programmes d'ordinateur.

La figure 3 représente un mode de mise en oeuvre d'un procédé de génération 300 du type du procédé 202 décrit en relation avec la figure 2 et un mode de mise en oeuvre d'un procédé de vérification 350 (CHECKSUM) du type du procédé de vérification 203 décrit en relation avec la figure 2.

Dans l'exemple préféré décrit précédemment, l'algorithme de cryptographie est l'algorithme connu sous la dénomination "Kyber", et les matrices à générer sont :

- une matrice A publique permettant de mettre en oeuvre l'algorithme ; et
- des vecteurs SecretData représentant des données secrètes utilisées par l'algorithme.

Le procédé de génération 300 est utilisé pour générer un à un les coefficients m[i][j] d'une matrice M comprenant n lignes et p colonnes, i étant un entier compris entre 1 et n, et j étant un entier compris entre 1 et p. La matrice M peut correspondre à la matrice A ou aux vecteurs SecretData, comme les vecteurs s, e, r et e2 décrits précédemment. Le procédé de génération 300 permet de mettre en oeuvre l'équation mathématique suivante :

[Math 1]

$$m[i][j] = Parse(XOF(\rho, i, j))$$

dans laquelle

- Parse est une fonction de génération de polynômes de degré connu à partir d'une ou plusieurs données pseudo-aléatoires ;
- XOF est une fonction de génération d'une ou plusieurs données pseudo-aléatoires ; et
- $\rho$ est une donnée de génération correspondant à la donnée seed décrite en relation avec la figure 2.

Autrement dit, la génération de la matrice M suit les étapes suivantes.

A une étape 301 ($\rho$,i,j), il est fourni la donnée de génération $\rho$, et des valeurs d'indices i et j. Selon un exemple particulier, la donnée $\rho$ est une donnée de 32 bytes, soit de 256 bits, et les indices i et j sont des données de 1 byte, soit de 8 bits.

A une étape 302 (XOF), successive à l'étape 301, la fonction XOF de génération d'une ou plusieurs données pseudo-aléatoires est appliquée aux données $\rho$, i et j. Selon un mode de réalisation, les données pseudo-aléatoires fournies en sortie de la fonction XOF sont de taille variable. Selon un exemple, la fonction XOF est une fonction de type éponge (Sponge) permettant de créer une fonction de hachage. Un exemple détaillé d'une fonction du type de la fonction XOF est décrite en relation avec la figure 4.

A une étape 303 (Parse), successive à l'étape 302, la fonction Parse de génération de polynômes de degré connu à partir d'une ou plusieurs données pseudo aléatoires est appliquée à la ou les données pseudo-aléatoires fournies par la fonction XOF. Comme la ou les données pseudo-aléatoires de sortie de la fonction XOF sont de taille variables, la fonction Parse est adaptée à prendre en entrée une donnée de taille variable pour fournir en sortie le polynôme de degré connu. Il existe plusieurs fonctions permettant de mettre en oeuvre la fonction Parse, deux fonctions connues sont les fonctions Parse et CBD. Selon un exemple, la fonction Parse est une fonction de sélection par injection.

Le polynôme de sortie de la fonction Parse forme un élément de la matrice. Il suffit ensuite de répéter les étapes 301 à 303 autant de fois que nécessaire pour avoir la matrice M complète.

Selon un mode de réalisation, la génération de la matrice A, et la génération des vecteurs SecretData peuvent chacune utiliser individuellement une fonction Parse différente, une fonction XOF différente, et une donnée de génération $\rho$ différente.

Ainsi, selon un mode de réalisation, les éléments mA[i][j] de la matrice A sont obtenus par la mise en oeuvre de l'équation mathématique suivante :

[Math 2]

$$mA[i][j] = ParseA(XOFA(\rho A, i, j))$$

dans laquelle :

- ParseA est une fonction de génération de polynômes de degré connu à partir d'une ou plusieurs données pseudo-aléatoires

- XOFA est une fonction de génération d'une ou plusieurs données pseudo-aléatoires ; et
- $\rho A$ est une donnée de génération correspondant à la donnée seed décrite en relation avec la figure 2.

Ainsi, selon un mode de réalisation, les éléments mSD[i][j] des vecteurs SecretData sont obtenus par la mise en oeuvre de l'équation mathématique suivante :

[Math 3]

$$mSD[i][j] = ParseSD(XOFSD(Seed(\rho A, i, j)))$$

dans laquelle :

- ParseSD est une fonction de génération de polynômes de degré connu à partir d'une ou plusieurs données pseudo-aléatoires ;
- XOFSD est une fonction de génération d'une ou plusieurs données pseudo-aléatoires ;
- Seed est une fonction d'adaptation de la donnée de génération $\rho A$ en fonction du vecteur de sortie voulu ;
- $\rho SD$ est une donnée de génération de la matrice A correspondant à la donnée seed décrite en relation avec la figure 2 ;
- dans ce cas, l'indice i est un nonce.

Selon un mode de réalisation, le procédé de vérification 350 associé au procédé de génération 300 est le suivant. Ce procédé 350 met en oeuvre une fonction de vérification Checksum, qui est, par exemple, une fonction de vérification par addition ou fonction de somme de contrôle. La fonction Checksum permet de vérifier que la matrice fournie par le procédé de génération 300 est conforme. Pour cela la fonction Checksum prend, comme donnée d'entrée, une partie des données de sortie de la fonction XOF.

Plus particulièrement, et selon un mode de réalisation, la fonction Checksum prend en entrée les derniers bits de données composant la donnée de sortie de la fonction XOF, aussi appelée partie finale de la donnée de sortie de la fonction XOF. Ces derniers bits sont dépendants de toutes les opérations précédentes, et en particulier de la donnée de génération $\rho$.

Selon un mode de réalisation, dans le cas préféré ou l'algorithme de chiffrement est celui connu sous la dénomination "Kyber", et que les éléments générés sont les vecteurs SecretData, alors les derniers bits utilisés par la fonction Checksum sont les bits de données de la sortie de la fonction XOF qui ne sont pas utilisés par la fonction Parse.

La figure 4 représente une fonction 400 du type de la fonction XOF décrite en relation avec la figure 3.

La fonction 400 est une fonction éponge (Sponge) permettant de construire des fonctions de hachage cryptographiques. Comme décrit en relation avec la figure 3, la fonction 400 prend en entrée les données $\rho$, i, et j décrites précédemment, et fournissent en sortie une donnée pseudo-aléatoire Z. Pour fonctionner, la fonction 400 reçoit, en outre, en entrée une donnée à hacher 401 composé d'une donnée r et d'une donnée c. La donnée r est de même taille que la donnée de sortie Z. La donnée c a une taille qui dépend du niveau de sécurité requis.

La fonction comprend deux phases de fonctionnement, une première phase d'absorption 402 suivie d'une deuxième phase d'essorage 403.

Pendant la phase d'absorption 402, une fonction 404 (f) est appliquée de façon successive à la donnée 401, tout en incorporant de façon périodique les données $\rho$, i, et j. Selon un mode de réalisation, la fonction 404 est une fonction de hachage cryptographique, comme la fonction Keccak. Plus particulièrement, la donnée r peut être obtenue en utilisant la fonction Seed décrite précédemment, dont le résultat est fournie en entrée à la fonction 404. La donnée r, sommée à la donnée c, est également nommé "état" dans la littérature. Selon un exemple, les données $\rho$, i, et j sont incorporées uniquement à la donnée r avant l'application de chaque fonction 404 par l'intermédiaire d'une fonction OU EXCLUSIVE (XOR). Selon un mode de réalisation, la fonction 404 est appliquée entre une et plusieurs fois pendant la phase 402.

Pendant la phase d'essorage 403, la fonction 404 (f) est appliquée de façon successive à la donnée 401. Selon un mode de réalisation, la fonction 404 est appliquée de l'ordre de 4 fois pendant la phase 403. La donnée de sortie Z est égale à la combinaison des données de sortie des fonctions 404 correspondant à l'application de la fonction 404 à la donnée r, générée par ladite fonction Seed.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## EP 4 542 922 A1

**Revendications**

1. Procédé de vérification (203 ; 350), mis en oeuvre par un dispositif électronique (100, 101, 103), d'une matrice (M ; A, e, s) utilisée pour la mise en oeuvre d'un algorithme de chiffrement de données (201) comprenant, pour la génération de ladite matrice (M ; A, e, s), l'utilisation d'une première fonction (XOF) et d'une deuxième fonction (Parse), ledit procédé de vérification (350) comprenant une vérification utilisant une partie finale des données de sortie de ladite première fonction (XOF).

2. Dispositif électronique (100, 101, 103) adapté à mettre en oeuvre un procédé de vérification (203 ; 350) d'une matrice (M ; A, e, s) utilisée pour la mise en oeuvre d'un algorithme de chiffrement de données (201) comprenant, pour la génération de ladite matrice (M ; A, e, s), l'utilisation d'une première fonction (XOF) et d'une deuxième fonction (Parse), ledit procédé de vérification (350) comprenant une vérification utilisant une partie finale des données de sortie de ladite première fonction (XOF).

3. Procédé selon la revendication 1, ou dispositif selon la revendication 2, dans lequel la première fonction (XOF) est une fonction de génération de données pseudo-aléatoires.

4. Procédé ou dispositif selon la revendication 3, dans lequel la première fonction (XOF) comprend une troisième fonction de hachage cryptographique (404).

5. Procédé ou dispositif selon la revendication 4, dans lequel la troisième fonction de hachage cryptographique (404) est la fonction Keccak.

6. Procédé selon l'une quelconque des revendications 1, 3 à 5, ou dispositif selon l'une quelconque des revendications 2 à 5, dans lequel ladite deuxième fonction (Parse) est une fonction de génération de polynômes à partir de données pseudo-aléatoires.

7. Procédé selon l'une quelconque des revendications 1, 3 à 6, ou dispositif selon l'une quelconque des revendications 2 à 6, dans lequel l'algorithme de chiffrement de donnée (201) est un algorithme de cryptographie basé sur les réseaux d'espace euclidien (Lattices-based cryptography).

8. Procédé ou dispositif selon la revendication 7, dans lequel l'algorithme de chiffrement (201) de donnée est l'algorithme "Kyber".

9. Procédé ou dispositif selon la revendication 8, dans lequel ladite matrice (A) est la matrice A dudit algorithme "Kyber".

10. Procédé ou dispositif selon la revendication 8 ou 9, dans lequel ladite matrice (s, e) est un vecteur de contexte dudit algorithme "Kyber".

11. Procédé ou dispositif selon la revendication 7, dans lequel l'algorithme de chiffrement de donnée (201) est l'algorithme "CRYSTALS-Dilithium".

12. Procédé de chiffrement de données (200) adapté à mettre en oeuvre ledit algorithme de chiffrement de données (201), comprenant le procédé de vérification (203 ; 350) selon l'une quelconque des revendications 1, 3 à 11.

13. Produit-programme d'ordinateur adapté à mettre en oeuvre le procédé de vérification (203 ; 350) selon l'une quelconque des revendications 1, 3 à 11.

14. Produit-programme d'ordinateur adapté à mettre en oeuvre le procédé de chiffrement (200) selon la revendication 12.

Fig 1

200

CYPHER

Seed

M

GEN
M

CRYPTO

202

CheckSum-Data

CHECKSUM

201

203

Fig 2

300

301 ρ,i,j

302 XOF

303 Parse

CHECKSUM

350

Fig 3

Fig 4

Europäisches
Patentamt

European
Patent Office

Office européen
des brevets

# RAPPORT DE RECHERCHE EUROPEENNE

Numéro de la demande

EP 24 20 6226

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/265167 A1 (BANERJEE UTSAV [US] ET AL) 20 août 2020 (2020-08-20) <br> * figure 2 * <br> * figure 6A * <br> * figure 9 * <br> * alinéa [0059] - alinéa [0062] * <br> * alinéa [0082] - alinéa [0085] * <br> * alinéa [0137] * <br> - - - - - | 1-14 | INV. <br> H04L9/08 <br> H04L9/30 <br> G06F7/58 |
| A | US 2022/353089 A1 (MASNY DANIEL [US] ET AL) 3 novembre 2022 (2022-11-03) <br> * figure 3 * <br> * figure 4 * <br> * alinéa [0020] * <br> * alinéa [0091] - alinéa [0092] * <br> * alinéa [0101] * <br> * alinéa [0105] * <br> * alinéa [0107] * <br> - - - - - | 1-14 | |
| A | US 2023/124617 A1 (MUKHERJEE PRATYAY [US] ET AL) 20 avril 2023 (2023-04-20) <br> * figure 2 * <br> * figure 7 * <br> * alinéa [0056] - alinéa [0059] * <br> * alinéa [0065] * <br> * alinéa [0254] * <br> - - - - - | 1-14 | **DOMAINES TECHNIQUES RECHERCHES (IPC)** <br><br> H04L <br> G06F |

Le présent rapport a été établi pour toutes les revendications

| Lieu de la recherche | Date d'achèvement de la recherche | Examinateur |
|---|---|---|
| Munich | 5 février 2025 | Caragata, Daniel |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 20 6226

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-02-2025

| Document brevet cité au rapport de recherche | Date de publication | Membre(s) de la famille de brevet(s) | Date de publication |
|---|---|---|---|
| US 2020265167 A1 | 20-08-2020 | EP 3903300 A1 | 03-11-2021 |
| | | KR 20210130196 A | 29-10-2021 |
| | | US 2020265167 A1 | 20-08-2020 |
| | | WO 2020172234 A1 | 27-08-2020 |
| US 2022353089 A1 | 03-11-2022 | CN 114521319 A | 20-05-2022 |
| | | EP 4035306 A1 | 03-08-2022 |
| | | US 2022353089 A1 | 03-11-2022 |
| | | US 2023412392 A1 | 21-12-2023 |
| | | WO 2021061833 A1 | 01-04-2021 |
| US 2023124617 A1 | 20-04-2023 | CA 3129118 A1 | 13-08-2020 |
| | | CA 3199161 A1 | 13-08-2020 |
| | | CN 113424492 A | 21-09-2021 |
| | | EP 3921974 A1 | 15-12-2021 |
| | | JP 7147073 B2 | 04-10-2022 |
| | | JP 2022516381 A | 25-02-2022 |
| | | SG 11202108410P A | 30-08-2021 |
| | | US 2022045865 A1 | 10-02-2022 |
| | | US 2023124617 A1 | 20-04-2023 |
| | | WO 2020162973 A1 | 13-08-2020 |

EPO FORM P0460

Pour tout renseignement concernant cette annexe : voir Journal Officiel de l'Office européen des brevets, No.12/82